# EUROPEAN PATENT APPLICATION

(11) **EP 2 640 017 A1**
(43) Date of publication of application: **18.09.2013**
(21) Application number: 12159099.6
(22) Date of filing: 12.03.2012
(51) Int. Cl.: H04L 12/58

(54) **COMMUNICATION DEVICE AND METHOD FOR PROCESSING MESSAGES**

(71) Applicant: BlackBerry Limited, Waterloo ON N2L 3W8 (CA)
(72) Inventor: Carmody, Michael, James, Waterloo, Ontario N2L 3W8 (CA)
(74) Representative: MERH-IP Matias Erny Reichl Hoffmann

(57) **Abstract**

According to embodiments described in the specification, a communication device and method for processing messages are provided. The method includes receiving message data at the communication device (205), the message data including at least a subject; receiving an instruction to send the message data (215); determining, responsive to receiving the instruction, whether the message data includes a message body (220); and when the determination is negative, automatically adding an indicator to the subject (225) prior to sending the message data (230), the indicator corresponding to the negative determination.

## Description

### FIELD

The specification relates generally to electronic communications, and specifically to a communication device and method for processing messages.

### BACKGROUND

Communications between communication devices such as cellular phones, laptop computers and the like has become widespread. The volume of such communications exchanged between communication devices can result in inefficient use of the computational resources of the communication devices.

### GENERAL

According to a still further aspect of the specification, a communication device is provided, comprising: a communications interface; a processor interconnected with the communications interface, the processor configured to: receive message data including at least a subject; receive an instruction to send the message data; determine, responsive to receiving the instruction, whether the message data includes a message body; and when the determination is negative, automatically add an indicator to the subject prior to sending the message data via the communications interface, the indicator corresponding to the negative determination. The indicator can be an end-of message indicator.

According to a still further aspect of the specification, a communication device is provided, comprising: a communications interface; a processor interconnected with the communications interface, the processor configured to: receive a message via the communications interface; determine whether the subject of the received message includes an end-of-message indicator; and when the determination is affirmative, generate an interface on a display, the interface including a representation of the message in association with an identifier distinguishing the message from other messages lacking indicators.

According to an aspect of the specification, a method of processing an outgoing message at a communication device is provided, comprising: receiving message data at the communication device, the message data including at least a subject; receiving an instruction to send the message data; determining, responsive to receiving the instruction, whether the message data includes a message body; and when the determination is negative, automatically adding an indicator to the subject prior to sending the message data, the indicator corresponding to the negative determination.

According to a further aspect of the specification, a method of processing an incoming message at a communication device is provided, comprising: receiving a message at a processor of the communication device via a communications interface; determining whether the subject of the received message includes an end-of-message indicator; and when the determination is affirmative, generating an interface on a display, the interface including a representation of the message in association with an identifier distinguishing the message from other messages lacking indicators.

According to a still further aspect of the specification, a method of processing an outgoing email message is provided, the method comprising: appending an end-of-message indicator to a subject line of the outgoing email message when the outgoing email message contains only subject line content.

According to a still further aspect of the specification, a non transitory computer readable storage medium is provided, storing a plurality of computer readable instructions, the computer readable instructions executable by a processor for performing any of the above methods.

### BRIEF DESCRIPTIONS OF THE DRAWINGS

Embodiments are described with reference to the following figures, in which:

Fig. 1 depicts a system for communication between communication devices, according to a non-limiting embodiment;

Fig. 2 depicts a method of processing messages, according to a non-limiting embodiment;

Fig. 3 depicts an example message composition interface provided in the performance of the method of Fig. 2, according to a non-limiting embodiment;

Fig. 4 depicts an example message database of the communication device of Fig. 1, according to a non-limiting embodiment;

Fig. 5 depicts an updated record of the database of Fig. 4, according to a non-limiting embodiment;

Fig. 6 depicts another example message composition interface provided in the performance of the method of Fig. 2, according to a non-limiting embodiment;

Fig. 7 depicts a further method of processing messages, according to a non-limiting embodiment;

Fig. 8 depicts an additional method of processing messages, according to a non-limiting embodiment;

Fig. 9 depicts an additional example message database of the communication device of Fig. 1, according to a non-limiting embodiment;

Fig. 10 depicts an interface provided in the performance of the method of Fig. 8, according to a non-limiting embodiment;

Fig. 11 depicts another interface provided in the performance of the method of Fig. 8, according to a non-limiting embodiment; and

Fig. 12 depicts a further interface provided in the performance of the method of Fig. 8, according to a non-limiting embodiment;.

### DETAILED DESCRIPTION OF THE EMBODIMENTS

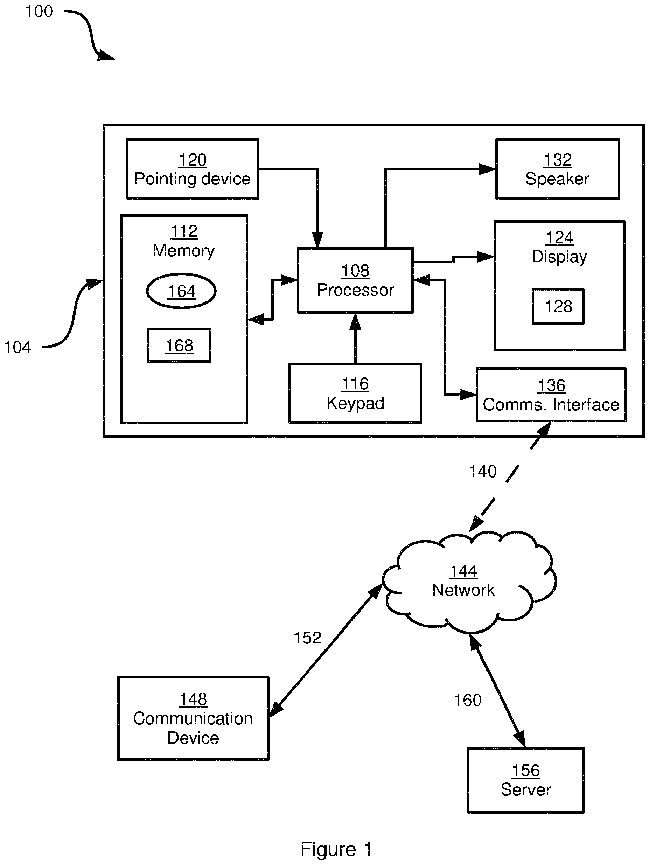

Figure 1 depicts a system 100 for enabling communications between communication devices. System 100 thus includes a communication device 104, which in the present example is based on the computing environment and functionality of a hand-held wireless communication device such as a smartphone. It is contemplated, however, that communication device 104 (and any other communication devices discussed herein) is not limited to such a hand-held wireless communication device. Other communication devices are also contemplated, including cellular telephones (also referred to as "feature phones", Personal Digital Assistants ("PDAs"), media or MP3 players, laptop computers, desktop computers, and the like.

Communication device 104 includes a processor 108 interconnected with a non-transitory computer readable storage medium such as memory 112. Memory 112 can be any suitable combination of volatile (e.g. Random Access Memory ("RAM")) and non-volatile (e.g. read only memory ("ROM"), Electrically Erasable Programmable Read Only Memory ("EEPROM"), flash memory, magnetic computer storage device, or optical disc) memory. Other types of computer readable storage medium are also contemplated, such as compact discs (CD-ROM, CD-RW) and digital video discs (DVD).

Communication device 104 also includes one or more input devices interconnected with processor 108. Such input devices are configured to receive input and provide data representative of such input to processor 108. Input devices can include, for example, a keypad 116 and a pointing device 120. Keypad 116 can receive input in the form of the depression of one or more keys, and can then provide data representative of such input to processor 108. The data provided to processor 108 can be, for example, an American Standard Code for Information Interchange (ASCII) value for each of the depressed keys. Keypad 116 can be a full QWERTY keypad, a reduced QWERTY keypad or any other suitable arrangement of keys. Pointing device 120 can be, for example, any one of or combination of a mouse, a touchpad, a trackball, and the like.

In some examples, communication device 104 can include additional input devices in the form of one or more touch screens, buttons, light sensors and the like (not shown). More generally, any suitable combination of the above-mentioned input devices can be incorporated into mobile electronic device 104.

Communication device 104 further includes one or more output devices. The output devices of mobile electronic device 104 include a display 124. Display 124 includes display circuitry 128 controllable by processor 108 for generating interfaces which include representations of data and/or applications maintained in memory 112. Display 124 includes a flat panel display comprising any one of, or any suitable combination of, a Liquid Crystal Display (LCD), a plasma display, an Organic Light Emitting Diode (OLED) display, and the like. Circuitry 128 can thus include any suitable combination of display buffers, transistors, LCD cells, plasma cells, phosphors, LEDs and the like. When the input devices of communication device 104 include a touch screen input device as mentioned above, the touch screen (not shown) can be integrated with display 124.

The output devices of communication device 104 can also include a speaker 132 interconnected with processor 108. Additional output devices are also contemplated, including, for example, a light-emitting indicator (not shown) in the form of an LED, and a motor or other mechanical output device (not shown) for causing mobile electronic device 104 to vibrate. In general, mobile electronic device 104 can include any suitable combination of the above-mentioned output devices, and may also include other output devices.

Communication device 104 also includes a communications interface 136 interconnected with processor 108. Communications interface 136 allows communication device 104 to communicate with other devices via a link 140 and a network 144. Network 144 can include any suitable combination of wired and/or wireless networks, including but not limited to a Wide Area Network (WAN) such as the Internet, a Local Area Network (LAN), cell phone networks, WiFi networks, WiMax networks and the like. Link 140 is compatible with network 144. In particular, link 140 can include a wireless link based on any of the Global System for Mobile communications (GSM), General Packet Radio Service (GPRS), Enhanced Data rates for GSM Evolution (EDGE), third and fourth-generation mobile communication system (3G and 4G), Institute of Electrical and Electronic Engineers (IEEE) 802.11 (WiFi) or other wireless protocols or standards. Link 140 can also include any base stations and backhaul links necessary to connect communication device 104 to network 144. In other examples, link 140 can include a wired link, such as an Ethernet link.

Communications interface 136 is selected for compatibility with link 140 as well as with network 144. Communications interface 136 thus includes one or more transmitter/receiver assemblies, or radios, and associated circuitry. For example, communications interface 136 can include a first assembly, or radio, for enabling communications over a WiFi network, and a second radio for enabling communications over one or more mobile telephone networks (e.g. 3G networks).

The various components of communication device 104 are contained within a housing (not shown) comprising any suitable combination of materials (e.g. aluminum, plastics, and the like). The components of communication device 104 are interconnected via a communication bus (not shown). Communication device 104 can be powered by a battery (not shown) also contained within the housing, though it will be understood that communication device 104 can also be supplied with electricity by a wired connection to a wall outlet or other power source. In some examples, such as examples where communication device 104 is a desktop computer, certain components need not be contained within the same housing. For example, display 124 can be housed separately from an enclosure housing processor 108 and memory 112. As a further example, keypad 116 can be replaced or supplemented by a keyboard (not shown) which is housed separately from the enclosures housing display 124, processor 108 and memory 112.

System 100 also includes a second communication device 148, connected to network 144 via a link 152, and a server 156 connected to network 144 via link 160. Server 156 can be, for example, a mail server associated with communication device 104. The nature of links 152 and 160 are not particularly limited, and in general enable communication device 148 and server 156 to communicate with each other and with communication device 104 over network 144.

Thus, communication device 104 is able, via network 144, to send and receive messages to and from communication device 148 and server 156. Such communications can include messages such as email messages, Short Message Service (SMS) messages, Multimedia Messaging Service (MMS) messages, and the like. To that end, a messaging application 164 is stored in memory 112 of communication device 104. Messaging application 164 comprises a plurality of computer-readable instructions which are executable by processor 108. Processor 108 is configured, via execution of the instructions in messaging application 164, to carry out various functions related to the processing of messages at communication device 104. Communication device 104 also stores a message database 168 in memory 112. Message database 168 is used by communication device 104 to store messages received from other devices and messages sent to other devices. Further discussion of application 164 and message database 168 will be provided below.

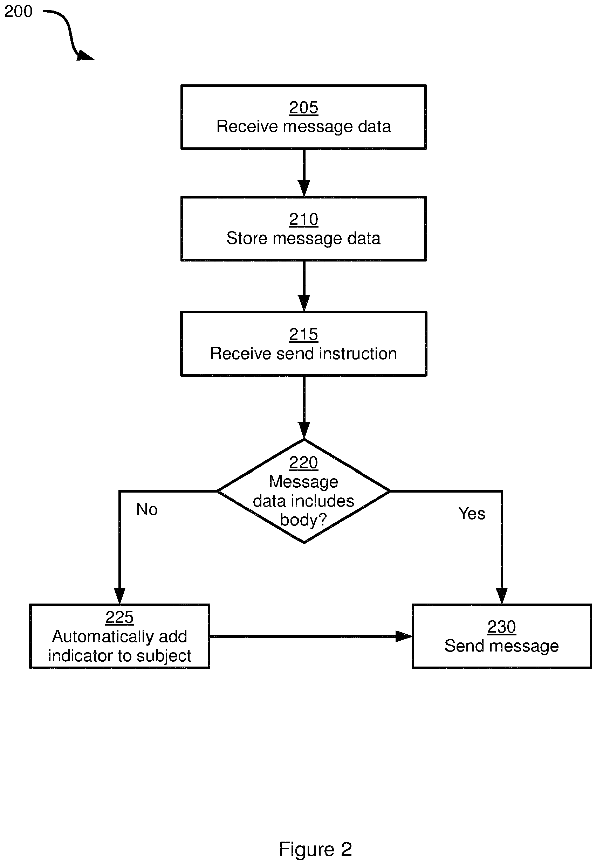

Turning now to Figure 2, a method 200 of processing outgoing messages is shown. Method 200 will be described in conjunction with its performance on system 100, and particularly at communication device 104. It is contemplated, however, that method 200 can be implemented in any suitable system. In addition, the performance of method 200 will be discussed in connection with email messages. It is contemplated that method 200 can also be applied to other types of messages, however.

In the present example, the performance of method 200 is carried out by communication device 104. Specifically, method 200 is performed by processor 108 (as configured by the execution of messaging application 164) in conjunction with the other components of communication device 104, which interact with and are controlled by processor 108.

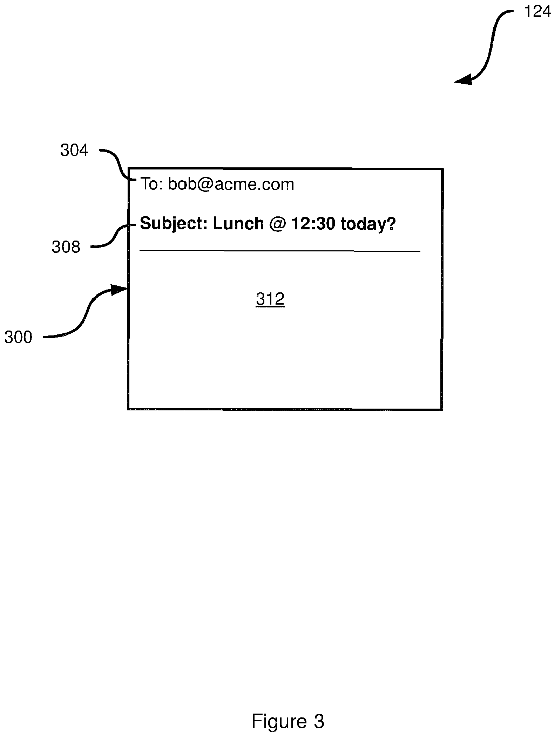

Beginning at block 205, communication device 104 is configured to receive message data in connection with a new outgoing email message (that is, a message being composed at communication device 104 for transmission to another device, or other devices). In particular, the message data can be received at processor 108 from keypad 116. The performance of block 205 can be preceded by the generation of a message composition interface on display 124 (which can in turn be generated by processor 108 in response to the receipt of a message composition instruction received from an input device of communication device 104). An example message composition interface 300 is shown in Figure 3, and includes various selectable interface fields for receiving input data to compose an email. In particular, interface 300 includes a "To:" field 304, into which one or more addressee or destination identifiers (such as email addresses) for the outgoing email can be inserted. Message composition interface 300 also includes a "Subject" field 308 into which a subject line can be inserted, and a message body field 312 into which the body, or content, of the email (which can include text, images and the like) can be inserted. It will now be apparent that the contents of fields 304 and 308 correspond to headers of the email, while the contents of field 312 corresponds to the body of the email.

Although the message data received at block 205 is described above as being received from an input device of communication device 104, in other examples, the message data can be received at communication device 104 from another device (not shown) connected to communication device 104, via a link such as a Bluetooth™ link, or the like.

Thus, the performance of block 205 of method 200 includes receiving input data representative of the contents of fields 304, 308 and 312. In the present example performance of method 200, therefore, block 205 includes receiving as input data the destination address "bob@acme.com" and the subject "Lunch @ 12:30 today?". The received message data therefore includes at least a subject.

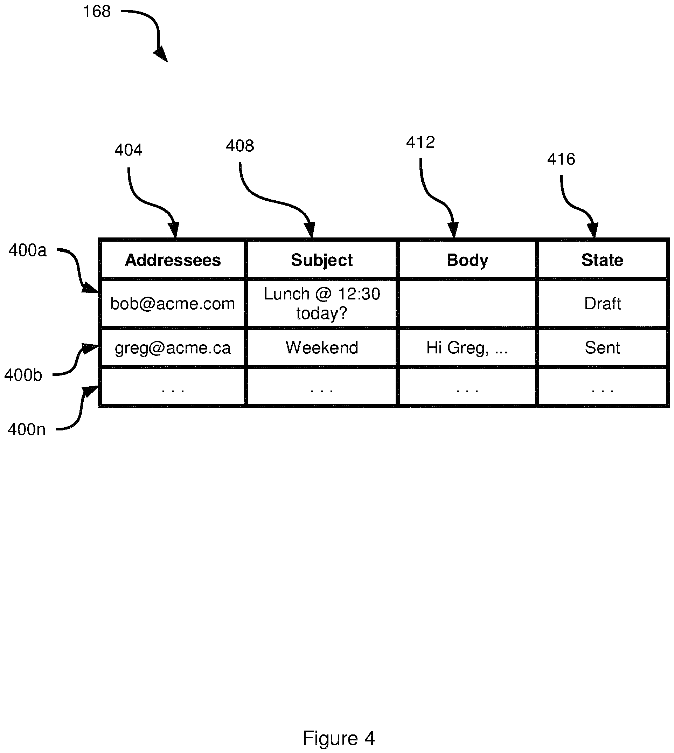

At block 210, processor 108 can be configured to store the received message data in memory 112, for example in database 168. Turning to Figure 4, an example database 168 is shown. Database 168 comprises a plurality of records 400 (labelled 400a, 400b, ..., 400n). Each record 400 contains data defining one email. Each record includes an addressee field 404, where addressee identifiers for the email are stored, a subject field 408, a body field 412, and a state field 416. Various combinations of fields (including other fields not shown in Figure 4) can be implemented in database 168. State field 416 contains an indication of the state of the email. For example, record 400a contains the message data received at block 205, and as the email defined by that data has not yet been sent, the state of record 400a is "draft". Another record, 400b, is shown, with the state "sent", indicating that communication device 104 previously transmitted that email to another device via link 140 and network 144.

In some examples, the storage of message data received at block 205 in database 168 can be omitted. For example, processor 108 can be configured, instead of storing the message data in memory 112 at block 210, to transmit the received message data to another device (not shown) connected to communication device 104 via, for example, a link such as a Bluetooth™ connection or the like. Thus, the received message data need not be stored at communication device 104, but can instead be stored elsewhere.

Returning to Figure 2, following storage of the message data received at block 205, the performance of method 200 continues to block 215, at which an instruction is received at processor 108 to send the message data received at block 205. The instruction can be received, for example, from one or both of keypad 116 and pointing device 120. For example, the depression of a combination of keys on keypad 116 during the display of interface 300 can generate input data which is interpreted by processor 108 as an instruction to send the message data entered in interface 300. Various other ways of generating a send instruction will also occur to those skilled in the art (including, for example, selectable interface elements or menus in interface 300). Although the send instruction received at block 215 is described above as being received from an input device of communication device 104, in other examples, the send instruction need not be received from an input device of communication device 104. For example, the send instruction can be received from another device (not shown) connected to communication device 104.

Following the receipt of the instruction to send the message data at block 215, the performance of method 200 advances to block 220. At block 220, processor 108 is configured to determine whether the message data received at block 205 includes a message body. In order to perform the determination at block 220, processor 108 can be configured to examine the record 400 in database 168 which corresponds to the message data in interface 300. Thus, in the present example performance of method 200, processor 108 is configured to examine record 400a of database 168, as record 400a contains the data entered in the fields of message composition interface 300.

In particular, processor 108 examines the body field 412 of record 400a (also referred to as field 412a) to determine whether field 412a contains any data. In the present example, field 412a is empty, because no input data was received in connection with field 312 of interface 300. At block 220, processor 108 therefore determines that the message data received at block 205 does not contain a message body, and the performance of method 200 proceeds to block 225.

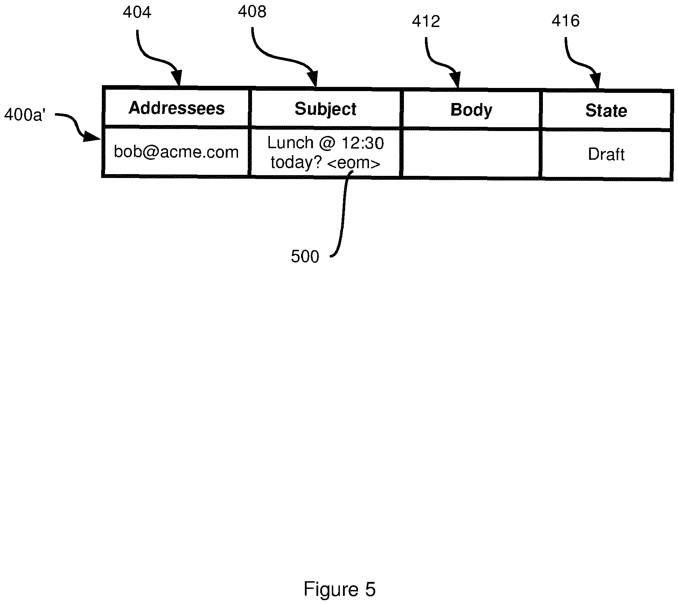

At block 225, following a negative determination at block 220, processor 108 is configured to automatically add an end-of-message indicator in the subject of the message data prior to sending the email. Turning to Figure 5, an updated version of record 400a, labelled 400a', is shown following the performance of block 225. Specifically, subject field 408 includes the original subject received at block 205, as well as an indicator 500. In the present example, indicator 500 is an "end of message" tag appearing as <eom>. Indicator 500 indicates the location of the end of the content of the email defined by record 400a', and thus corresponds to the negative determination at block 220. That is, because record 400a' does not include any data in the body field, the entire content (that is, the data intended to convey information to the recipient of the email) of the message defined by record 400a' is in the subject, and thus the end of the subject is considered the end of the message itself, even if the email actually contains additional data such as a signature, as will be discussed below. Therefore, in the present example, indicator 500 is appended to the end of the data in subject field 408. The nature of indicator 500 is not particularly limited. For example, other labels than "<eom>" can be used.

Returning to Figure 2, following the performance of block 225, processor 108 is configured to send the message data at block 230. The nature of the performance of block 230 is not particularly limited, and can include any necessary formatting of the message data, and/or appending of additional control data to adhere to relevant protocols, followed by transmission of the formatted message data over network 144 via link 140. As a result of the performance of block 225, the recipient of the message data (the address "bob@acme.com") will receive an email having the subject "Lunch @ 12:30 today? <eom>" rather than the original subject "Lunch @ 12:30 today?". It is contemplated that in examples where the message data was stored at another device (that is, not in memory 112), the performance of block 230 can include the transmission of an instruction from processor 108, via communications interface 136, to that other device to send the message data.

When the determination at block 220 is affirmative (that is, if the message data received at block 205 did include a body), the performance of method 200 proceeds directly to block 230, bypassing block 225.

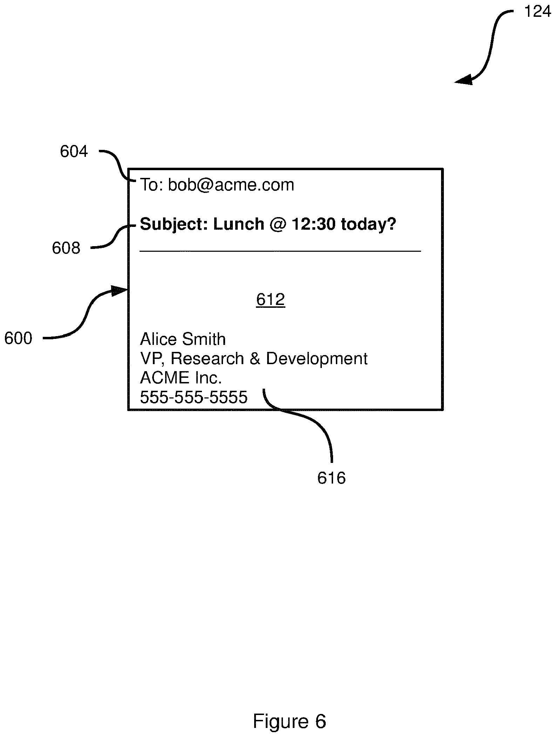

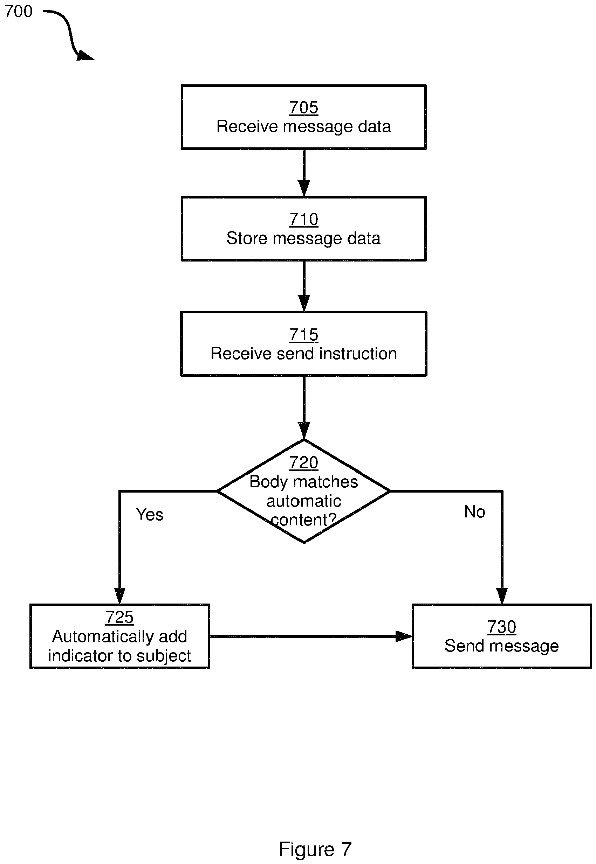

In some examples, it is contemplated that messaging application 164 can be configured to automatically insert content into the body field of an email. Such an example is illustrated in Figure 6, in which a message composition interface 600 is shown. Interface 600 includes a "To:" field 604, a "Subject" field 608, and a body field 612 which are similar to fields 304 and 308 discussed earlier. Body field 612, however, contains a signature block 616 which processor 108 is configured to automatically insert. It is contemplated that despite the presence of content in body field 612 (and thus in the corresponding field in database 168), processor 108 can be configured to consider the email defined by the data shown in Figure 6 as not having a body. Specifically, as processor 108 is configured to determine whether the message data received at block 205 (which is not necessarily the entirety of the message data defining the email) includes a body, processor 108 can ignore automatically inserted content such as the signature block shown in Figure 6. Turning to Figure 7, one example of a way to implement such "ignoring" is shown as method 700.

Blocks 705, 710, 715, 725 and 730 of method 700 are as described above in connection with, respectively, blocks 205, 210, 215, 225 and 230 of method 200. At block 720 of method 700, processor 108 is configured to determine whether the body of the message data received at block 705 matches any items of automatically inserted content. For example, communication device 104 may have a signature stored in memory 112 which is inserted automatically in every new email, as shown in Figure 6. If the body of the message data in database 168 matches the automatically inserted content stored in memory 112, then the message data received at block 705 did not include any additional data for the body field. In other words, the performance of block 720 evaluates the body of the message, ignoring any automatically inserted content. In the present example, the determination at block 720 is affirmative, and the performance of method 700 proceeds to block 725. Otherwise, performance of method 700 would proceed to block 730.

Other ways of "ignoring" automatically inserted message data are also contemplated. For example, message data stored in database 168 can be marked with tags indicating whether it was received as input data from input devices of communication device 104, or whether it was automatically generated by processor 108.

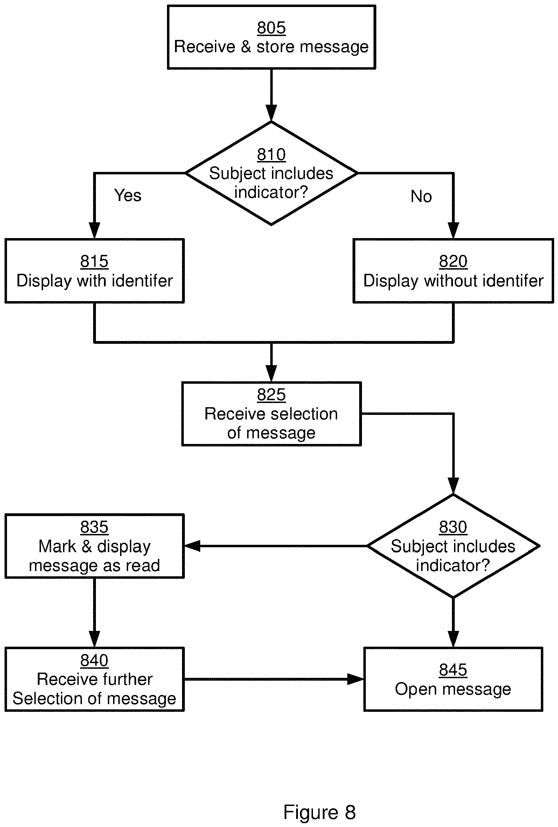

Turning now to Figure 8, a method 800 of processing incoming messages is shown. Method 800 will be described in conjunction with its performance on system 100, and particularly at communication device 104. It is contemplated, however, that method 800 can be implemented in any suitable system. In addition, the performance of method 800 will be discussed in connection with email messages, although it is contemplated that method 800 can also be applied to other types of messages.

In the present example, the performance of method 800 is carried out by communication device 104. Specifically, method 800 is performed by processor 108 (as configured by the execution of messaging application 164) in conjunction with the other components of communication device 104, which interact with and are controlled by processor 108. Thus, it is contemplated that execution of messaging application 164 can configure processor 108 to provide the functionality of methods 200 and 700, as well as method 800. In some examples, however, messaging application 164 can configure processor 108 to carry out the functionality of only one, or only a subset, of the methods described herein.

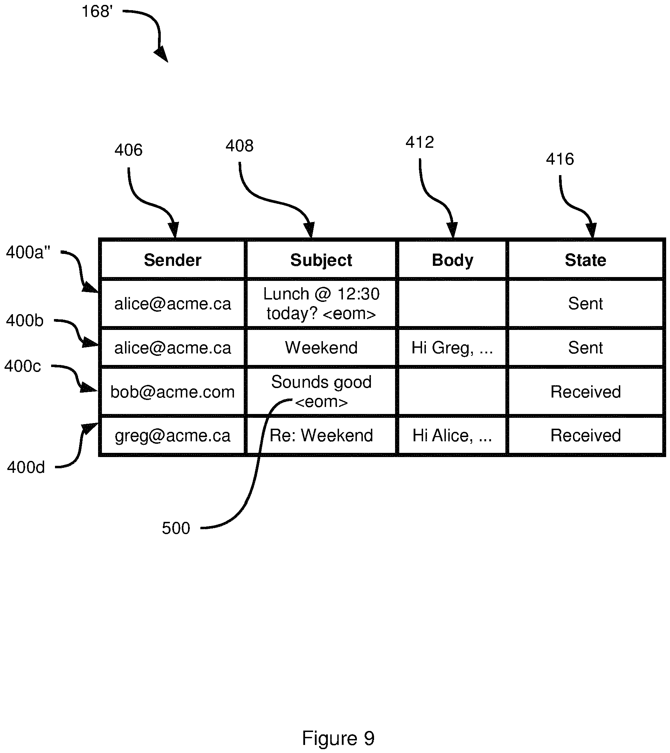

Beginning at block 805, an email is received at communication device 104. For example, referring briefly to Figure 1, an email can be received from server 156 via network 144, link 140 and communications interface 136. Processor 108 is configured to store the received email in memory 112, for example in database 168. In other examples, the received email can also be stored at another device rather than in memory 112. Turning to Figure 9, an updated version of database 168 is shown as database 168'. In Figure 9, a sender field 406 is shown, and addressee field 404 is omitted for simplicity. It is contemplated that both fields may be present in database 168, however.

In addition to records 400a" (which is now marked as having been sent following the performance of method 200) and 400b, two additional records 400c and 400d are shown defining two emails received at communication device 104. In the present example, record 400c was received in reply to the email defined by record 400a". As seen in Figure 9, record 400c includes a sender address 406c (bob@acme.com), a subject 408c with an <eom> indicator 500, and an empty message body 412c. Record 400d includes a sender address 406d, a subject 408d, and a body 412d.

Returning to Figure 8, following the receipt and storage of an email at block 805, processor 108 is configured to determine whether the subject of the received email includes an indicator at block 810, prior to generating an interface representing the contents of database 168 on display 124. Thus, although such an instruction is not illustrated in Figure 8, the performance of block 810 can be preceded by the receipt of an instruction at processor 108 from (for example) keypad 116, to generate an interface comprising a list of received emails from database 168. Such an interface may be referred to as an inbox view.

At block 810, processor 108 is therefore configured to examine the subject field 408 of each record in database 168 for the presence of an indicator such as indicator 500. When an indicator is present in a particular record 400, processor 108 is configured to display the corresponding email with an identifier indicating that the email does not include any data in the body, at block 815. When no indicator is present, processor 108 is configured to display the corresponding email without an identifier, at block 820. The identifier thus distinguishes emails with indicators from emails lacking indicators.

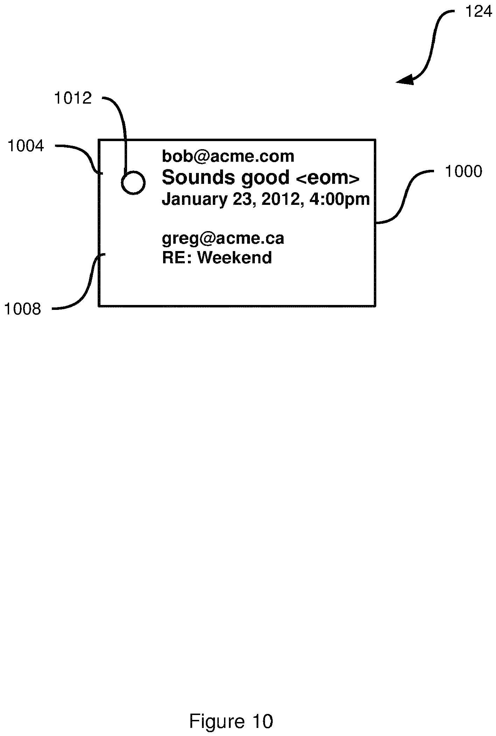

Figure 10 shows an example of the result of performing blocks 810-820 for records 400c and 400d. In particular, Figure 10 shows an interface 1000 generated on display 124, under the control of processor 108. Interface 1000 includes an element 1004 representing record 400c, and an element 1008 representing record 400d. Element 1004 includes an identifier in the form of an icon 1012 indicating that the email represented by element 1004 does not include data in the body (or, as discussed above, includes a body with only automatically inserted content, such as a signature). Element 1008, on the other hand, does not include an icon, as the email represented by element 1008 does include data in the body.

The nature of the identifier used in block 815 is not particularly limited. For example, as shown in Figure 10, element 1004 also includes the subject of record 400c in a larger font than that of element 1008. Additionally, a full date and time string is provided with element 1004, whereas such a string is not provided with element 1008. A variety of identifiers are thus contemplated. In further variations, the identifier can be a lack of a particular icon. That is, any message with data in the body can be represented in interface 1000 with an icon, while messages with empty bodies can be represented without any icon.

Returning to Figure 8, the performance of method 800 continues at block 825, where a selection of an email is received at processor 108 from one or more input devices. For example, element 1004 of interface 1000 can be selected by way of input received at pointing device 120. Following receipt of the selection, processor 108 is configured to determine at block 830 whether the subject of the selected email includes an indicator, as described in connection with block 810. In the present example performance, therefore, the determination at block 830 is affirmative, as element 1004 corresponds to record 400c, which does not include any data in the body. The performance of method 800 thus proceeds to block 835, at which the selected email is marked as having been read.

It is contemplated that each record 400 of database 168 can include a field (not shown) indicating whether the message defined by that record has been read or not. Referring briefly to Figure 9, field 416 can store both the state of an email as discussed above, as well as an indication of whether the email has been read or not. For example, following the performance of block 835, field 416 of record 400c can be updated to contain, "Received; Read". Although a "read" email may be an email that has been accessed (that is, opened) by processor 108 for generation of the email's content on display 124, such accessing is not strictly necessary for an email to be marked read. For example, processor 108 can cause an email to be marked read in response to input data received from the input devices of communication device 104, even if the email has not been accessed as described above. Thus, an email that is marked as having been read is considered to have been accessed for generation of the email's content on display 120, whether or not it has in fact been accessed.

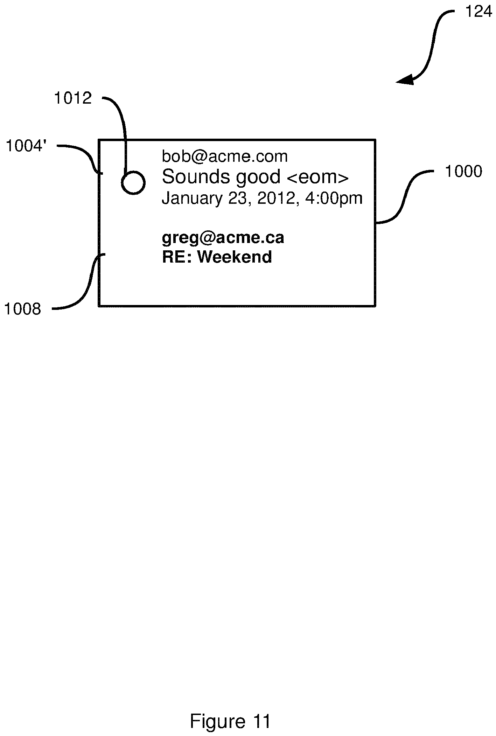

Once the email has been marked as read (by updating the relevant field in database 168), processor 108 is also configured to display the email as having been read. Thus, the performance of block 835 is concluded by updating interface 1000 as shown in Figure 11. In Figure 11, an updated version 1000' of interface 1000 is shown, in which element 1004 has been replaced by element 1004'. Element 1004' is similar to element 1004, but presents text in regular font, as opposed to bold font as a result of record 400c being marked read. Element 1008 remains bolded, as record 400d has not been marked read.

Referring again to Figure 8, the performance of method 800 continues at block 840, at which processor 108 is configured to receive a further selection of element 1004 from an input device of communication device 104. Processor 108 can be configured to interpret a selection of element 1004 as a "further" selection when element 1004 is selected and record 400c is marked as read.

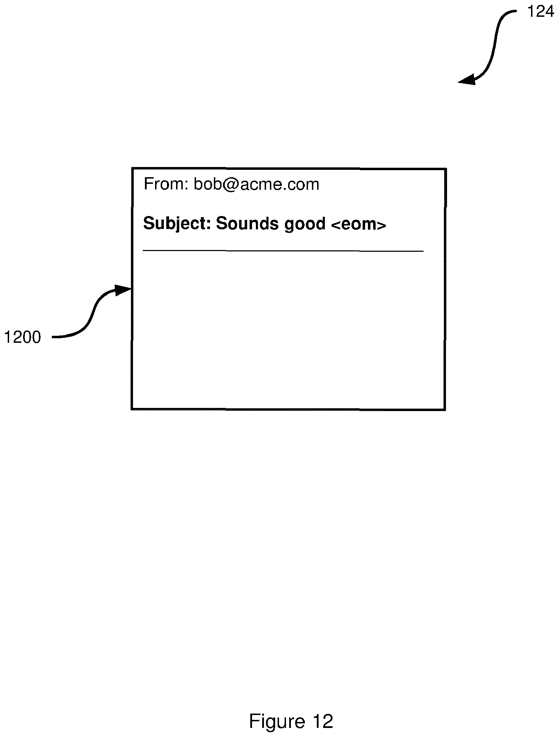

At block 845, following receipt of the further selection at block 840, processor 108 is configured to access record 400c and "open" the email defined by record 400c by generating an interface on display 124 that includes a representation of the contents of record 400c. An example of such an interface is shown at 1200 in Figure 12. Interface 1200 includes representations of the sender, subject, and body fields of record 400c.

Referring again to Figure 8, when the determination at block 830 is negative, selection of an element causes processor 108 to open the email at block 845. Thus, if a selection of element 1008 in Figure 10 were received at processor 108, the performance of method 800 would proceed directly to block 845, as the email defined by record 400d (corresponding to element 1008) does not include an indicator.

In some examples, the display of interfaces (at block 815, 820, 835 and 845) can be performed at a display other than display 124. For example, communication device 104 can be configured to transmit data representing the above-described interfaces to another device (not shown) connected with communication device 104. The selections discussed above also need not be received at processor 108 from an input device of communication device 104. In some examples, such selections can be received from the above-mentioned other device, via communications interface 136.

It is contemplated that variations and combinations of the above-described methods can be implemented at communication device 104 and at other communication devices, such as device 148. For example, in some variations, communication device 104 can be configured to determine if a record in database 168 contains any data (whether automatically inserted or not). If processor 108 determines that the body does contain data, a second determination can then be performed to determine if the body matches any automatically inserted content elements in memory 112.

In another variation, communication device 104 can be configured to remove indicator 500 in some circumstances. For example, if the determination at block 220 is affirmative, an additional, determination can be performed by processor 108 to determine whether the subject of the message to be sent includes indicator 500. This could happen, for example, when the message to be sent is in reply to an original message that included indicator 500 in the subject and therefore includes the subject of the original message. If it is determined that the subject does include indicator 500, processor 108 can be configured to remove the indicator prior to sending the message. A similar modification can also be made to method 700.

In a further variation, processor 108 can be configured to examine a message following its receipt at block 805 for the presence of data in the body. If the body of the message is empty, processor 108 can be configured to insert an indicator, such as indicator 500, in the subject of the message prior to performing block 810. Conversely, processor 108 can be configured to remove an indicator from the subject if it is determined that the body of the received message is not empty.

Those skilled in the art will appreciate that in some embodiments, the functionality of the messaging application 164 can be implemented using preprogrammed hardware or firmware elements (e.g., application specific integrated circuits (ASICs), electrically erasable programmable read-only memories (EEPROMs), etc.), or other related components.

Persons skilled in the art will appreciate that there are yet more alternative implementations and modifications possible for implementing the embodiments, and that the above implementations and examples are only illustrations of one or more embodiments. The scope, therefore, is only to be limited by the claims appended hereto.

## Claims

1. A communication device (104) for processing outgoing messages, comprising:
a communications interface (136);
a processor (108) interconnected with the communications interface, the processor configured to:
receive (205) message data including at least a subject;
receive (215) an instruction to send the message data;
determine (220), responsive to receiving the instruction, whether the message data includes a message body; and
when the determination is negative, automatically add (225) an indicator to the subject prior to sending the message data via the communications interface, the indicator corresponding to the negative determination.

2. The communication device (104) of claim 1, the processor (108) configured to determine whether the message data includes a message body by determining (720) whether a received message body matches automatically insertable data stored in a memory (112).

3. The communication device (104) of claim 2, wherein when the received message body matches the automatically insertable data, the determination of whether the message data includes a message body is negative.

4. A communication device (104) for processing incoming messages, comprising:
a communications interface (136);
a processor (108) interconnected with the communications interface, the processor configured to:
receive (805) a message via the communications interface (136);
determine (810) whether the subject of the received message includes an end-of-message indicator; and
when the determination is affirmative, generate (815) an interface on a display (124), the interface including a representation of the message in association with an identifier distinguishing the message from other messages lacking indicators.

5. The communication device (104) of claim 4, further comprising an input device (116, 120), the processor (108) further configured to:
receive a selection of the message from the input device; and
responsive to receiving the selection, mark (835) the message as read in the memory, and update the representation to indicate that the message has been marked as read.

6. The communication device (104) of claim 5, the processor (108) further configured to:
receive (840) a further selection of the message from the input device (116, 120); and
generate (845) a further interface on the display (124), the further interface including a representation of the contents of the message.

7. The communication device (104) of claim 4 or claim 5, wherein the identifier includes at least one of an icon (1012), an increased font size and a time and date string.

8. A method (200) of processing an outgoing message at a communication device (104), comprising:
receiving (205) message data at the communication device (104), the message data including at least a subject (408);
receiving (215) an instruction to send the message data;
determining (220), responsive to receiving the instruction, whether the message data includes a message body; and
when the determination is negative, automatically adding (225) an indicator to the subject prior to sending (230) the message data, the indicator corresponding to the negative determination.

9. The method (200) of claim 8, wherein determining whether the message data includes a message body comprises determining (720) whether a received message body matches automatically insertable data stored in a memory (112).

10. The method (200) of claim 9, wherein when the received message body matches the automatically insertable data, the determination (220) of whether the message data includes a message body is negative.

11. A method (800) of processing an incoming message at a communication device (104), comprising:
receiving (805) a message at a processor (108) of the communication device (104) via a communications interface (136);
determining (810) whether the subject of the received message includes an end-of-message indicator; and
when the determination is affirmative, generating (815) an interface on a display (124), the interface including a representation of the message in association with an identifier (1012) distinguishing the message from other messages lacking indicators.

12. The method (800) of claim 11, further comprising:
receiving (825) a selection of the message; and
responsive to receiving the selection, marking (835) the message as read in the memory, and updating the representation to indicate that the message has been marked as read.

13. The method (800) of claim 12, further comprising:
receiving (840) a further selection of the message; and
generating (845) a further interface on the display, the further interface including a representation of the contents of the message.

14. A non transitory computer readable storage medium storing a plurality of computer readable instructions, the computer readable instructions executable by a processor for performing the method (200, 700, 800) of any one of claims 8 to 13.

15. A method (200, 700) of processing an outgoing email message, the method comprising:
appending (225, 725) an end-of-message indicator to a subject line of the outgoing email message when the outgoing email message contains only subject line content.

## Amended claims

### Amended claims in accordance with Rule 137(2) EPC.

**1.** A communication device (104) for processing outgoing messages, comprising:
a communications interface (136);
a processor (108) interconnected with the communications interface, the processor configured to:
receive (205) message data including at least a subject;
receive (215) an instruction to send the message data;
determine (220), responsive to receiving the instruction, whether the message data includes a message body; and
when the determination is negative, automatically add (225) an end-of-message indicator to the subject prior to sending the message data via the communications interface, the end-of-message indicator corresponding to the negative determination.

**2.** The communication device (104) of claim 1, the processor (108) configured to determine whether the message data includes a message body by determining (720) whether a received message body matches automatically insertable data stored in a memory (112).

**3.** The communication device (104) of claim 2, wherein when the received message body matches the automatically insertable data, the determination of whether the message data includes a message body is negative.

**4.** A communication device (104) for processing incoming messages, comprising:
a communications interface (136);
a processor (108) interconnected with the communications interface, the processor configured to:
receive (805) a message via the communications interface (136);
determine (810) whether the subject of the received message includes an end-of-message indicator; and
when the determination is affirmative, generate (815) an interface on a display (124), the interface including a representation of the message in association with an identifier distinguishing the message from other messages lacking end-of-message indicators.

**5.** The communication device (104) of claim 4, further comprising an input device (116, 120), the processor (108) further configured to:
receive a selection of the message from the input device; and
responsive to receiving the selection, mark (835) the message as read in the memory, and update the representation to indicate that the message has been marked as read.

**6.** The communication device (104) of claim 5, the processor (108) further configured to:
receive (840) a further selection of the message from the input device (116, 120); and
generate (845) a further interface on the display (124), the further interface including a representation of the contents of the message.

**7.** The communication device (104) of claim 4 or claim 5, wherein the identifier includes at least one of an icon (1012), an increased font size and a time and date string.

**8.** A method (200) of processing an outgoing message at a communication device (104), comprising:
receiving (205) message data at the communication device (104), the message data including at least a subject (408);
receiving (215) an instruction to send the message data;
determining (220), responsive to receiving the instruction, whether the message data includes a message body; and
when the determination is negative, automatically adding (225) an end-of-message indicator to the subject prior to sending (230) the message data, the end-of-message indicator corresponding to the negative determination.

**9.** The method (200) of claim 8, wherein determining whether the message data includes a message body comprises determining (720) whether a received message body matches automatically insertable data stored in a memory (112).

**10.** The method (200) of claim 9, wherein when the received message body matches the automatically insertable data, the determination (220) of whether the message data includes a message body is negative.

**11.** A method (800) of processing an incoming message at a communication device (104), comprising:
receiving (805) a message at a processor (108) of the communication device (104) via a communications interface (136);
determining (810) whether the subject of the received message includes an end-of-message indicator; and
when the determination is affirmative, generating (815) an interface on a display (124), the interface including a representation of the message in association with an identifier (1012) distinguishing the message from other messages lacking end-of-message indicators.

**12.** The method (800) of claim 11, further comprising:
receiving (825) a selection of the message; and
responsive to receiving the selection, marking (835) the message as read in the memory, and updating the representation to indicate that the message has been marked as read.

**13.** The method (800) of claim 12, further comprising:
receiving (840) a further selection of the message; and
generating (845) a further interface on the display, the further interface including a representation of the contents of the message.

**14.** A non transitory computer readable storage medium storing a plurality of computer readable instructions, the computer readable instructions executable by a processor for performing all the steps of the method (200, 700, 800) of any one of claims 8 to 13.
